# EUROPEAN PATENT APPLICATION

(11) **EP 3 489 781 A1**
(43) Date of publication of application: **29.05.2019**
(21) Application number: 18208177.8
(22) Date of filing: 23.11.2018
(51) Int. Cl.: G05B 23/02, F24D 3/00, F24D 10/00, F24D 19/10

(54) **SYSTEM AND METHOD FOR MONITORING A CENTRAL HEATING SYSTEM**

(30) Priority: 24.11.2017 GB 201719566
(71) Applicant: Dooley, Simon, Sale Cheshire M33 2XH (GB); Dooley, Simon, Sale Cheshire M33 2XH (GB)
(72) Inventor: Dooley, Simon, Sale Cheshire M33 2XH (GB); Dooley, Simon, Sale Cheshire M33 2XH (GB)
(74) Representative: Kent, Miranda Jacket

(57) **Abstract**

There is a system 100 for monitoring a central heating system 102, comprising: a sensor 114 arranged to measure the pressure within the central heating system across a pressure range of at least 2 bar; sensor electronics in communication with the sensor 114, the sensor electronics configured to digitise a measured pressure received from the sensor 114 at one of at least four levels, the levels having intervals of 0.15 bar or less, and to transmit the digitised measured pressure to a remote device 112; and a remote device 112 in communication with the sensor electronics. The remote device 112 is configured to receive and process the digitised measured pressure from the sensor electronics to determine the measured pressure, and to determine a potential fault condition based on the measured pressure. There is also a method for monitoring a central heating system 102.

## Description

The present invention relates to a system and method for monitoring a central heating system, in particular for measuring the pressure within a pressurised central heating system to determine a potential fault condition.

A central heating system can provide warmth to the whole interior, or portion, of a building, as well as hot water. The heat is generated at a single point, generally comprising a boiler for heating water, or any other suitable liquid. A boiler may refer to any of a conventional, system, condensing or combination boiler. The heat is distributed throughout the relevant part of the building, typically by fluid circulating through pipework. Such pipework may lead to space heating radiators.

Domestic boilers frequently fail. Failure may happen during the day while the domestic property is unoccupied, and so the problem may only be identified when the occupier returns home to a cold property, or property with no hot water. It may be the following day before an engineer can even be requested, and the engineer may not be able to come out immediately, or at a time that is convenient for the occupier. The occupier may therefore be left without heating or hot water for an undesirable length of time.

Existing systems have their limitations when it comes to the detection of failure or degradation in the performance of components, as the system often has no knowledge of when the boiler, or another part of the central heating system, is active or inactive or experiencing change.

There is a need for an improved system and method for monitoring a central heating system. The inventors and applicant have appreciated that one of the most common causes of domestic boiler failure is due to a change in the pressure within the central heating system. The inventors and applicant have further appreciated that it would be desirable to have an automated early warning of a possible failure of such boilers and central heating systems.

According to a first aspect of the present invention, there is provided a system for monitoring a central heating system, comprising:
a sensor arranged to measure the pressure within the central heating system across a pressure range of at least 2 bar;
sensor electronics in communication with the sensor, the sensor electronics configured to digitise a measured pressure received from the sensor at one of at least four levels, the levels having intervals of 0.15 bar or less, and to transmit the digitised measured pressure to a remote device; and
a remote device in communication with the sensor electronics, the remote device configured to receive and process the digitised measured pressure from the sensor electronics to determine the measured pressure, and to determine a potential fault condition based on the measured pressure.

The system therefore provides for an efficient way of remotely monitoring the pressure of a central heating system in a home or other building, and so quickly identifying when a potential fault condition occurs. Measuring and digitising the pressure in this way across a range, at such a resolution (levels and intervals), provides for an effective way of identifying the problem remotely and accurately. Most problems with boilers and central heating systems are due to a change in pressure in the central heating system, for instance there may be a loss of pressure in the central heating system due to the presence of tiny leaks or due to the malfunction of an expansion vessel within the central heating system. Therefore, remotely monitoring the pressure of the system allows a potential fault condition, and so problem, to be identified earlier, being identified as soon as a problem occurs, and so allows for more timely and efficient correction of the problem, perhaps before the problem becomes more expensive to fix. In turn, this may help reduce costs associated with the unnecessary call-out of engineers, and for an energy supplier, it may make planning work more manageable since boiler breakdown can be pre-empted.

Determining a potential fault condition based on the measured pressure may comprise comparing the measured pressure to at least one threshold value. This may provide for an efficient way of identifying whether there has been a loss of pressure or build up of excess pressure in the central heating system. Determining a potential fault condition based on the measured pressure may further comprise comparing the measured pressure to a second threshold value. This may provide help provide an indication of the severity of the potential fault condition.

Determining a potential fault condition based on the measured pressure may comprise comparing the measured pressure to a predetermined trend in the pressure. The remote device may be configured to determine the predetermined trend in the pressure based on previous pressure measurements received from the sensor electronics. If the measured pressure does not follow the predetermined trend, a potential fault condition may be determined. This may be used to identify a potential fault condition such as, for instance, a potential leak in the central heating system, an expansion vessel malfunctioning, a heat exchanger failing or a cylinder coil being compromised. The pressure may remain fairly consistent over time and then suddenly rise or fall, and the remote device may be able to detect that this indicates a potential fault condition.

If the remote device determines a potential fault condition based on the measured pressure, the remote device may be further configured to transmit a control signal to the sensor electronics to cause the sensor to measure the pressure within the central heating system across a pressure range of at least 2 bar a second time, for transmitting back to the remote device to determine a second measured pressure. This may allow the remote device to identify a trend in the pressure measurement, and/or may provide for a more accurate indication of whether there is actually a fault condition.

The remote device may be configured to confirm the determination of a potential fault condition based on the second measured pressure.

The remote device may be configured to use the measured pressure and the second measured pressure to identify a trend in the pressure of the central heating system to confirm a determination of a potential fault condition.

The remote device may be configured to compare the identified trend to at least one threshold value to determine a severity of determined potential fault condition.

The remote device may comprise an alarm configured to activate upon determination of a potential fault condition, or upon confirmation of a determination of a potential fault condition. This is clearly helpful for drawing attention to the fact that there may a problem with the central heating system that needs to be addressed. The alarm may be any combination of an audible, visual, tactile or vibratory alarm, or any other suitable alarm. Any one or more of these alarms may be more useful for a particular situation.

The remote device may be configured, upon determination of a potential fault condition or upon confirmation of determination of a potential fault condition, to send an alert signal to a second remote device at a second remote location. For instance, it may be helpful to send this information to a particular department or geographical location within the energy supplier company, or to a contact for the central heating system, for instance the homeowner when the central heating system is located in a house.

The remote device and/or the second remote device may be configured for wireless communication. The wireless communication comprises any one or more of Internet, WiFi, Bluetooth, Zigbee, Radio, cellular and Infrared, or any other suitable means of wireless communication. One or more of these may be suitable for a particular situation.

The sensor electronics may be configured to receive a control signal from the remote device and/or the second remote device to cause the sensor to measure the pressure within the central heating system, and the sensor electronics is further configured to cause the sensor to measure the pressure within the central heating system. This may allow for remote control of the sensor to cause the sensor to take a pressure reading, perhaps from a control room of the energy supplier, or from an application on the smart phone of the homeowner of the central heating system for example.

The sensor electronics may be configured for wireless communication with the remote device and/or the second remote device. The wireless communication may comprise any one or more of Internet, WiFi, Bluetooth, Zigbee, Radio, cellular and Infrared, or any other suitable means of wireless communication. One or more of these may be more suitable or beneficial in a certain situations.

The system may further comprise an adjustment means in communication with the sensor electronics, wherein the adjustment means is configured to adjust the pressure within the central heating system, and the sensor electronics is configured to receive a control signal from the remote device and/or the second remote device to control the adjustment means. Providing for remote adjustment of the pressure is clearly advantageous. This may prevent the need for an engineer to come out at all where the determined potential fault condition was due to a glitch in the system for instance, or it may at least allow for keeping the central heating system functioning until an engineer can come out. It may also keep costs down for repairs, since it may prevent outlaying the costs associated with new parts. Alternatively, the adjustment means may be separately in communication with the remote device and/or the second remote device, to receive a control signal directly from the remote device and/or the second remote device to control the adjustment means. The adjustment means would comprise its own electronics and communication means in this case.

The adjustment means may have a first position for forcing fluid to enter the central heating system to increase the pressure within the central heating system. The inventors and applicant have identified that a loss of pressure in a central heating system is one of the most common causes of faults therewith, and so being able to top up the pressure remotely would clearly be beneficial. The remote device and adjustment means may be configured to top the pressure up to a certain level, to a predetermined pressure. The remote device may be configured to calculate for how long an adjustment means would need to be operated, for instance, for how long the adjustment means would need to remain in the first position to be able to top the pressure up to an acceptable level, or predetermined pressure.

The adjustment means may have a second position for forcing fluid to leave the central heating system to decrease the pressure within the central heating system. It may also be helpful to reduce the pressure in the system if it gets too high to prevent the boiler, or any parts therein, for instance a pressure relief valve, breaking or blowing. The adjustment means may not have such a second position.

The remote device, in response to determining a potential fault condition, or in response to the measured pressure exceeding a threshold value, may be configured to transmit a control signal to the sensor electronics to cause the adjustment means to move into the first position or the second position based on the determined potential fault condition, to adjust the pressure in the central heating system accordingly. Providing for remote adjustment of the pressure in response to determining a potential fault condition is clearly advantageous. This may prevent the need for an engineer to come out, or may at least allow for keeping the central heating system functioning until an engineer can come out.

The remote device, in response to determining a potential fault condition and causing the adjustment means to adjust the pressure in the central heating system accordingly, may be further configured to transmit a control signal to the sensor electronics to cause the sensor to measure a further pressure for transmitting back to the remote device for processing. This may be a helpful for determining that adjusting the pressure has helped fix or improve the potential fault condition.

The remote device may be further configured to transmit a control signal to the sensor electronics to cause the sensor to measure a further pressure for transmitting back to the remote device for processing, only after a predetermined time period has elapsed from causing the adjustment means to adjust the pressure in the central heating system accordingly. This may be helpful for determining that adjusting the pressure has helped fix the potential fault condition, perhaps allowing sufficient time for the potential fault condition to rematerialize and cause the pressure in the system to change again.

The sensor may generate a signal proportional to the pressure within the central heating system. Providing for a linear measurement of the pressure in this way provides for an efficient and cost effective way of measuring the pressure within the central heating system across a broad range.

The sensor may be arranged to measure the pressure within the central heating system across a pressure range of at least 2.5 bar, or at least 3 bar, or at least 3.5 bar, or at least 4 bar. Providing for a measure of pressure over a certain range may be particularly advantageous for certain central heating systems.

The sensor may be connected to pipework within the central heating system. This may provide for very easy retrofitting of the system to a central heating system, and may allow for easy access, for servicing a part of the system for example.

The sensor and sensor electronics may be connected to an attachment means, the attachment means comprising a pipe portion having an opening to accommodate a pipe therein, the pipe portion further comprising an internal screw thread. This may allow the sensor and sensor electronics to screw onto a valve portion of a radiator. This may provide for a very convenient place for attachment, and for gaining access thereto. The opening may be sized to accommodate a pipe having a 15mm diameter, and the internal screw thread may be 0.5 inch British Standard Pipe, BSP. This may allow the sensor and sensor electronics to screw onto a valve portion of a standard sized radiator. This may provide for a very convenient place for attachment, and for gaining access thereto.

The sensor may be configured to measure the pressure within the central heating system intermittently, or continuously. The sensor may be configured to measure the pressure on demand by receiving a signal from the sensor electronics.

The sensor electronics may be configured to digitise a measured pressure received from the sensor at a one of at least five levels, or at one of at least six levels, or at one of at least ten levels, or at one of at least twenty levels, or at one of at least thirty levels, and/or with intervals of 0.10 bar or less, or of 0.05 bar or less, or of 0.01 bar or less. This may provide for a more accurate indication of a potential fault condition.

The sensor electronics may comprise a battery or power supply for powering any combination of the sensor, sensor electronics, and adjustment means. Each may have their own battery or power supply. The system may further comprise an external power source, wherein any combination of the sensor, sensor electronics, and adjustment means are powered by the external power source.

The potential fault condition may be any one or more of: a loss of pressure in the central heating system; a low pressure for the central heating system; the presence of a leak in the central heating system; malfunction of an expansion vessel in the central heating system; an increase in pressure in the central heating system; a high pressure for the central heating system; a fault with a hot water cylinder within the central heating system; a fault with a heat exchanger within the central heating system; and the pressure in the central heating system being outside of an acceptable range.

The sensor may be a pressure transducer. This may be an effective way of measuring the pressure. Any other suitable sensor for measuring pressure may be used.

The sensor electronics may be a printed circuit board, and may comprise a microprocessor and an embedded antenna. This may be effective and space saving.

The remote device and/or second remote device may be any one of a server, a computer, a laptop, a tablet, or a smart phone, although any other suitable electrical device is envisaged. Each of these devices may be more suitable for a particular situation.

The adjustment means may comprise one or more valves. The adjustment means may comprise one or more solenoid valves. The adjustment means may further comprise one or more water disconnectors and/or a back flow relief port. This may be done in order to comply with water byelaws.

According to a second aspect of the present invention, there is provided a method for monitoring a central heating system, comprising:
measuring the pressure within the central heating system across a pressure range of at least 2 bar;
digitising the measured pressure at at one of at least four levels, the levels having intervals of 0.15 bar or less;
transmitting the digitised measured pressure to a remote device;
processing the digitised measured pressure at the remote device to determine the measured pressure; and
determining a potential fault condition based on the measured pressure.

As for the system, this method similarly provides for an efficient way of remotely monitoring the pressure of a central heating system in a home or other building, and so quickly identifying when a potential fault condition occurs. Measuring and digitising the pressure in this way across a range, at such a resolution (levels and intervals), provides for an effective way of identifying the problem remotely and accurately. Most problems with boilers and central heating systems are due to a change in pressure in the central heating system, for instance there may be a loss of pressure in the central heating system due to the presence of tiny leaks or due to the malfunction of an expansion vessel within the central heating system. Therefore, remotely monitoring the pressure of the system allows a potential fault condition, and so problem, to be identified earlier, being identified as soon as a problem occurs, and so allows for more timely and efficient correction of the problem, perhaps before the problem becomes more expensive to fix. In turn, this may help reduce costs associated with the unnecessary call-out of engineers, and for an energy supplier, it may make planning work more manageable since boiler breakdown can be pre-empted. Further advantages mentioned above in relation to the system, apply as appropriate and applicable to the method below.

Determining a potential fault condition based on the measured pressure may comprise comparing the measured pressure to at least one threshold value. Determining a potential fault condition based on the measured pressure may further comprise comparing the measured pressure to a second threshold value.

Determining a potential fault condition based on the measured pressure may comprise comparing the measured pressure to a predetermined trend in the pressure. The remote device may determine the predetermined trend in the pressure based on previously measured, digitised, transmitted and processed pressure measurements. If the measured pressure does not follow the predetermined trend, a potential fault condition may be determined.

The remote device may determine a potential fault condition based on the measured pressure. If a potential fault condition based on the measured pressure is determined, the method may further comprise transmitting a control signal from the remote device to cause a second pressure measurement to be taken for transmitting back to the remote device.

The method may further comprise digitising the second measured pressure at one of at least four levels, the levels having intervals of 0.15 bar or less, and transmitting the digitised second measured pressure to the remote device.

The method may further comprise processing the digitised second measured pressure at the remote device to determine the second measured pressure, and confirming a determined potential fault condition based on the second measured pressure.

The method may further comprise processing the measured pressure and the second measured pressure at the remote device to identify a trend in the pressure of the central heating system for confirming a determined potential fault condition.

The method may further comprise comparing the identified trend to at least one threshold value for determining a severity of a determined potential fault condition.

The method may further comprise activating an alarm at the remote device on determining a potential fault condition and/or confirming a determined potential fault condition. The alarm may be any combination of an audible, visual, tactile or vibratory alarm, or any other suitable alarm.

The method may further comprise comprising transmitting from the remote device an alert signal to a second remote device at a second remote location to indicate a potential fault condition.

The method may further comprise connecting a sensor and associated sensor electronics on pipework of the central heating system for measuring the pressure within the central heating system across the relevant pressure range.

The method may further comprise connecting a sensor and associated sensor electronics to a part of a radiator of the central heating system for measuring the pressure within the central heating system across the relevant pressure range.

The method may further comprise remotely adjusting the pressure within the central heating system from the remote device based on the measured pressure and/or the potential fault condition.

Remotely adjusting the pressure within the central heating system from the remote device may comprise analysing the measured pressure and/or the potential fault condition at the remote device and remotely adjusting the pressure based on the analysis. Analysing the measured pressure may comprise confirming that the measured pressure exceeds a predetermined threshold.

Remotely adjusting the pressure within the central heating system may comprise forcing fluid to enter the central heating to increase the pressure within the central heating system. Remotely adjusting the pressure within the central heating system comprises forcing fluid to leave the central heating to reduce the pressure within the central heating system.

After remotely adjusting the pressure within the central heating system from the remote device, the method may further comprise transmitting a signal from the remote device to cause a further occurrence of measuring the pressure within the central heating system across a pressure range of at least 2 bar for transmitting back to the remote device.

The method may further comprise digitising the further measured pressure at one of at least four levels, the levels having intervals of 0.15 bar or less, and transmitting the digitised further measured pressure back to the remote device.

The potential fault condition may be one or more of: a loss of pressure in the central heating system; a low pressure for the central heating system; the presence of a leak in the central heating system; malfunction of an expansion vessel in the central heating system; an increase in pressure in the central heating system; a high pressure for the central heating system; a fault with a hot water cylinder within the central heating system; a fault with a heat exchanger within the central heating system; and the pressure in the central heating system being outside of an acceptable range.

Measuring the pressure within the central heating system across a pressure range of at least 2 bar may occur intermittently or continuously. It may occur continuously when a potential fault condition has been identified, but otherwise occur intermittently.

Measuring the pressure within the central heating system across a pressure range of at least 2 bar may comprise generating a signal proportional to the pressure within the central heating system across a pressure range of at least 2 bar.

Measuring the pressure within the central heating system across a pressure range of at least 2 bar may comprise measuring the pressure within the central heating system across a pressure range of at least 2.5 bar, or at least 3 bar, or at least 3.5 bar, or at least 4 bar.

Digitising the measured pressure may comprise digitising the measured pressure at one of at least five levels, or at one of at least six levels, or at one of at least ten levels, or at one of at least twenty levels, or at one of at least thirty levels, and/or with intervals of 0.10 bar or less, or of 0.05 bar or less, or of 0.01 bar or less

The remote device and/or second remote device may be any one of a server, a computer, a laptop, a tablet, or a smart phone, or it may be any other suitable electronic device.

Any communication may be wireless. The wireless communication may comprise any one or more of Internet, WiFi, Bluetooth, Zigbee, Radio, cellular and Infrared, although any other suitable means of wireless communication is envisaged.

There is also provided a system of the first aspect of the present invention, comprising any feature mentioned in relation thereto, for carrying out the method according to the second aspect of the present invention, comprising any feature mentioned in relation thereto.

Any one or more of the features of one aspect of the present invention may apply to another aspect of the present invention as appropriate and applicable.

Embodiments of the present invention will now be described, by way of example only, with reference to the accompanying drawings, in which:
- Figure 1: shows a schematic diagram of system in accordance with an embodiment of the present invention;
- Figure 2: shows a cross sectional view of a part of a system in accordance with an embodiment of the present invention;
- Figure 3: shows a cross sectional view of a part of a system in accordance with an embodiment of the present invention;
- Figure 4: shows a graph representative of the pressure within an exemplary central heating system when the system is operating normally;
- Figure 5: shows a graph representative of the pressure within an exemplary central heating system when the system has an exemplary fault;
- Figure 6: shows a graph representative of the pressure within an exemplary central heating system when the system has a different exemplary fault to that of figure 5; and
- Figure 7: shows a graph representative of the pressure within an exemplary central heating system when the system has a different exemplary fault to those of figures 5 and 6.

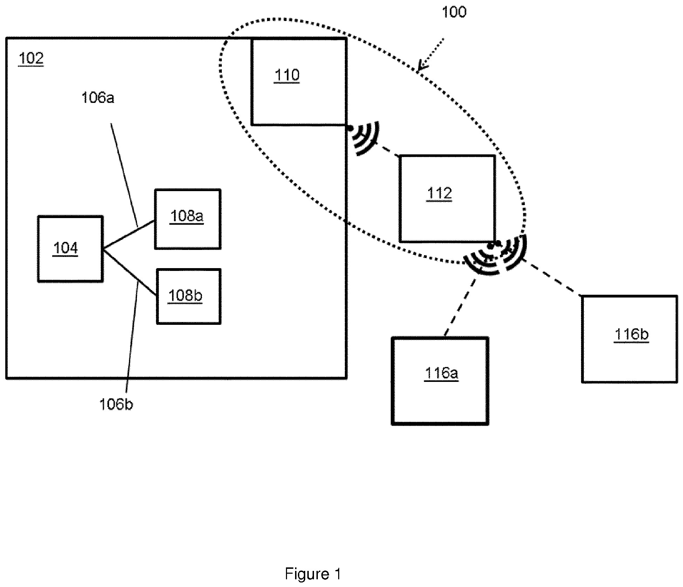

Referring to the figures, and in particular figure 1, there is shown a system 100 for monitoring a pressurised central heating system 102 and for identifying a potential fault condition, or issue, within the central heating system 102.

The central heating system 102 is shown comprising at least a boiler unit 104, and exemplary pipework 106a 106b and radiators 108a 108b, although not shown in full or in detail. The central heating system 102 may comprise any combination of standard elements usually found within a central heating system. The boiler unit 104 may refer to any of a conventional, system, condensing or combination boiler. The boiler unit 104 may contain an array of standard elements usually found in a domestic boiler, so for instance including any combination of a burner, a heat exchanger, a diverter valve for the heat exchanger, a combustion chamber, a fluid pump, a pressure switch for a fan, a gas valve, a water pressure switch and a PCB control box. The boiler unit 104 may also comprise pipe connections used as inlets and outlets for the fluid being circulated therefrom, through the central heating system 102.

The system 100 comprises an apparatus 110 for placement within the central heating system 102 and a remote device 112 for wirelessly communicating with the apparatus 110.

The apparatus 110 comprises a sensor 114 for measuring the pressure within the central heating system 102. The sensor 114 can be placed at any suitable point in the central heating system 102, as will be apparent to those skilled in the art. The sensor 114 may be attached to pipework 106a 106b within the central heating system 102. This sensor 110 may be any sensor for measuring pressure across a linear range, for instance over a pressure range of at least 2 bar (200 kPa), or between approximately 0-4 bar (approximately 0-400 kPa). The apparatus 110 may comprise sensor electronics connected to the sensor 114 for receiving a measured pressure from the sensor 114. The sensor electronics may be in wireless communication with the remote device 112. The sensor electronics may be configured to digitise the received measured pressure at a suitable resolution of between approximately 0.01-0.15 bar (1-15 kPa). The sensor electronics may be configured to digitise the received measured pressure at one of at least four levels, or at one of at least five levels, or at one of at least six levels, or at one of at least ten levels, or at one of at least twenty levels, or at one of at least thirty levels, and/or the levels may have intervals of 0.15 bar (15 kPa) or less, or of 0.10 bar (10 kPa) or less, or of 0.05 bar (5 kPa) or less, or of 0.01 bar (1 kPa) or less. The sensor electronics may be configured to control operation of the sensor 114, for instance to send a signal thereto to force the sensor to take a pressure measurement. The sensor 110 may be a pressure transducer, and the sensor electronics may comprise a processor, perhaps a microprocessor, and/or may comprise a printed circuit board (PCB) mountable to the sensor 114 that has processing capabilities. In an embodiment, the pressure transducer senses the pressure within the central heating system, providing a varying voltage output to the connected processor, proportional to the pressure within the system, the processor being configured to read and digitise the measured pressure for transmission.

The apparatus 110 may comprise a power supply or battery, or may use any suitable means for powering the sensor 114 and/or sensor electronics. A single power supply or battery may be used to power both the sensor and sensor electronics for instance, or it may be that they each have their own. Alternatively, any suitable means for powering the sensor and/or sensor electronics may be used.

The apparatus 110 or sensor electronics may comprise a communication means for wirelessly communicating with the remote device, for instance to transmit digitised pressure measurements thereto, and for receiving signals from the remote device. The wireless communication technology may include, but is not limited to, Internet, WiFi, Bluetooth, Zigbee, Radio, cellular and Infrared. The communication means may be the PCB also having communication capabilities, for instance an embedded antenna. Any signals transmitted may comprise a time stamp, or any means for indicating an associated time of transmission.

The remote device 112 is in wired or wireless communication with the sensor electronics. The wireless communication technology may include, but is not limited to, Internet, WiFi, Bluetooth, Zigbee, Radio, cellular and Infrared. The remote device 112 is configured to receive and process the digitised measured pressure from the sensor electronics to determine the measured pressure. The remote device 112 may be a server, a computer, a laptop, a tablet, a smart phone, or any other portable or stationed device at a remote location, having such processing capabilities. The remote location could for instance be an energy supplier's control room or similar.

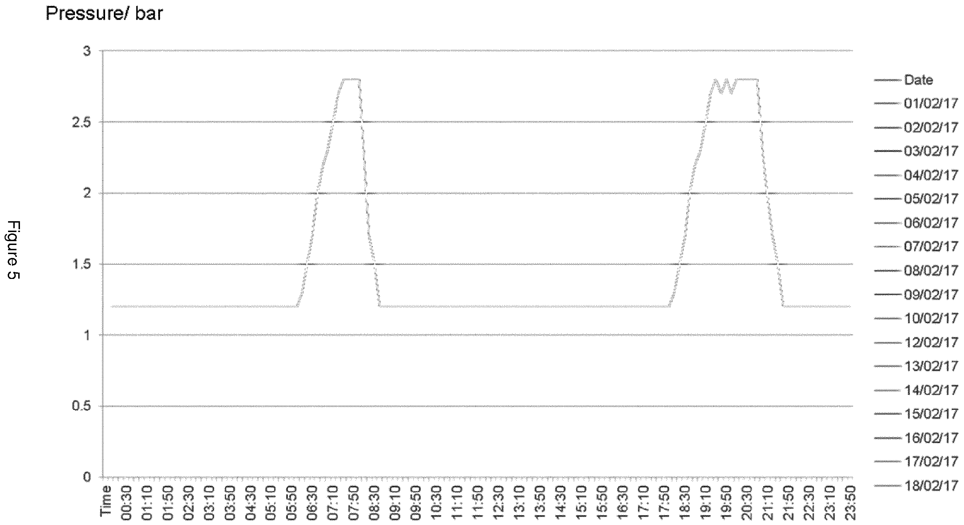

The remote device 112 may be configured to identify a potential fault condition with the measured pressure. The remote device may be configured to use previous measurements of pressure from the sensor 114 and sensor electronics, and/or other information already provided to the remote device 112 to determine a predetermined trend in the pressure within the central heating system 102. The remote device 112 may analyse the measured pressure to identify whether the measured pressure follows this predetermined trend. If the measured pressure does not follow this predetermined trend, the remote device 112 may determine a potential fault condition. For instance, the potential fault condition could be that there is a potential leak in the central heating system 102, an expansion vessel has malfunctioned, a heat exchanger has failed or a cylinder coil has been compromised. In these cases, the measured pressure would not follow the expected trend (see for instance, figures 5-7).

The remote device 112 may be configured to compare the monitored pressure to a threshold value, or to two threshold values. This may indicate whether the pressure has dropped below a normal or acceptable level, or predetermined pressure, and so is considered low, or exceeded a normal or acceptable level, or predetermined pressure, and so is considered high. Boilers tend to fail when the pressure in a central heating system falls to around 0.5-0.7 bar (50-70 kPa), and so identifying remotely that the central heating system 102 has dropped to near this value, could mean that the contact for the central heating system 102 could be contacted to explain the potential problem, before any failure occurs. Boilers also tend to comprise a pressure relief valve that automatically activates when pressure in the system reaches, for instance approximately 3 bar (300 kPa). The valve may stop functioning after activation though. Being able to monitor the pressure remotely to identify if the pressure is increasing, or has increased, may mean that an engineer can be called out to assess the issue, before the pressure reaches such a level. This may save money in replacing parts. The remote device 112 may check whether the monitored pressure is within an acceptable pressure range, comparing to both a high and low threshold value. The threshold and range may vary depending on the particular type and specification of the central heating system 102 and/or boiler unit 104. The remote device 112 may be monitored manually, for instance by a human, which may also allow for determination of a potential fault condition with the measured pressure.

The remote device 112 may comprise an alarm or alerting means. If the remote device 112 identifies a problem with the measured pressure, an alarm may be triggered to indicate this. The alarm may be audible, visual, tactile, or any other suitable alarm.

The remote device 112 may transmit a signal to one or more other remote devices 116a 116b, at a second, or further remote locations to also alert them to an identified potential fault condition. For instance, it may be helpful to send this information to a particular department or geographical location within the energy supplier company, or to a secondary device/system. The secondary device/system may belong to the contact for the central heating system 102, for instance the homeowner when the central heating system is located in a house. This may be communicated via any suitable wired or wireless communication technology. The wireless communication technology may include, but is not limited to, Internet, WiFi, Bluetooth, Zigbee, Radio, cellular and Infrared. An alarm or alert may subsequently be triggered at the one or more other devices to alert a user of the one or more other remote devices to the identified potential fault condition, or problem.

The remote device 112 may be configured to send a control signal to the sensor electronics to cause the sensor 114 to take a pressure measurement on demand. The remote device 112 may be configured to do this when a problem is identified with an original pressure measurement, and so to obtain a second pressure measurement. The remote device 112 may then use the second pressure measurement and the original pressure measurement to determine a trend in the measured pressure. For instance, the original measurement may comprise an error or blip, and so the second pressure measurement may suggest that there is no problem with the central heating system. Alternatively, this may allow the remote device 112 to determine that the pressure is in fact decreasing, and so the central heating system 102 may have an associated potential fault condition, for instance a potential leak. The remote device 112 may further determine the rate at which the pressure is decreasing in order to indicate a severity of the identified problem. The remote device 112 may similarly be able to do this where the pressure if found to be increasing. The remote device 112 may be configured to send a control signal to the sensor electronics to cause the sensor 114 to take two or more pressure measurements. This may allow the remote device 112 to more accurately determine an associated trend. The remote device 112 may do this where the first and second pressure measurements indicate a faster rate of change in pressure, and so potentially a more severe potential fault condition.

In an embodiment, in use, the apparatus 100 may be attached to a cold water pipe that is provided as an inlet to the boiler unit 104 of the central heating system 102. The apparatus 100 comprises a pressure transducer 114, attached to a PCB having a microprocessor and embedded antenna in communication with the microprocessor. The pressure transducer 114 is configured to measure the pressure within the central heating system 102. The pressure transducer 114 intermittently, or continuously, generates a varying voltage output to the connected microprocessor as a function of the pressure imposed upon it from the pipe 106a of the central heating system 102, operating across a pressure range of at least approximately 2 bar (200 kPa). The microprocessor is configured to read and digitise the varying output voltage, and so the measured pressure, for transmission. The microprocessor may digitise the measured pressure at a resolution of at least approximately 0.15 bar (15 kPa). The microprocessor may digitise the measured pressure at one of at least four levels, or at one of at least five levels, or at one of at least six levels, or at one of at least ten levels, or at one of at least twenty levels, or at one of at least thirty levels, and/or the levels may have intervals of 0.15 bar (15 kPa) or less, or of 0.10 bar (10 kPa) or less, or of 0.05 bar (5 kPa) or less, or of 0.01 bar (1 kPa) or less. The embedded antenna communicates the measured pressure wirelessly to a remote device 112 using any suitable wireless communication technology. The remote device 112 may be a computer in the energy supplier's control room. The computer is configured to receive and process the digitised measured pressure from the sensor electronics to determine the measured pressure. The computer 112 may compare the received pressure to at least one threshold value to determine whether the measured pressure is below this value. This may indicate that the pressure has dropped to a problematic level, where a system failure may occur. The computer 112 may compare the received pressure to a predetermined trend in the pressure within the central heating system 102. The computer 102 may have previously determined this predetermined trend. The computer 102 may determine if the measured pressure follows this trend, and if not, a potential fault condition is identified. If a problem is identified, a visual alarm will appear on the screen of the computer. The computer may also send a similar alert to the relevant contact of the central heating system, perhaps generating an alert on an application on the contact's mobile phone 116a for example.

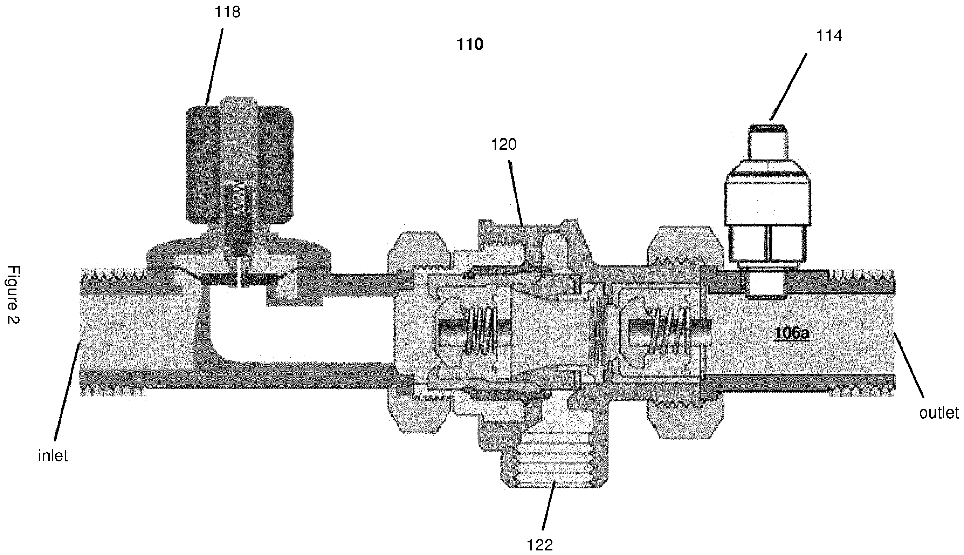

Referring to figure 2, the apparatus 110 may further comprise adjusting means for adjusting the pressure within the central heating system 102, and allowing for this to be carried out remotely. The adjusting means may comprise a valve 118, for instance a solenoid valve, more particularly a water solenoid valve, that may be remotely controlled by the remote device 112. The adjusting means may be positioned at a similar location to where a filling loop in the central heating system would normally be found, although any suitable location is possible as would be appreciated by those skilled in the art. The adjusting means may be positioned on pipework 106a within the central heating system 102, perhaps adjacent to the sensor 114 and sensor electronics. The adjusting means may comprise processing means, perhaps being mounted to a PCB, and/or may be connected to the sensor electronics. The adjusting means may be in wired or wireless communication with the sensor electronics. The adjusting means, perhaps by way of the PCB, comprises communication means, perhaps by way of an embedded antenna, for communicating wirelessly with the remote device 112. The wireless communication technology may include, but is not limited to, Internet, WiFi, Bluetooth, Zigbee, Radio, cellular and Infrared. The processing means is operable to open a valve to let fluid flow into the central heating system 102 to increase the pressure accordingly. This may be a solenoid valve. The processing means may also be operable to open an alternative valve to let fluid flow out of the central heating system 102 to decrease the pressure accordingly. To comply with water byelaws, a water disconnector 120 may be required between process water, water already in the system, and the public water supply, to ensure that no water flows back into the public water supply. Such a water disconnector 120 may comprise a back flow relief port 122 as is shown in figure 2. The sensor electronics may instead act as the processing means for the adjusting means.

In use, when a problem is identified with the monitored pressure as described above, the remote device 112 is configured to transmit one or more signals to the adjusting means. The one or more signals are transmitted to control the adjusting means to adjust the pressure of the central heating system so that the pressure is at a certain level, or predetermined pressure, or above or below a certain limit. For instance, if the remote device 112 identifies that the pressure has dropped below a certain threshold, it transmits a signal to the adjusting means to let more fluid into the system and so increase the pressure thereof. The remote device 112 and adjusting means may be operable to top the system up to a pre-set limit, which may for instance be approximately 1.3-1.4 bar (130-140 kPa). In the case of a solenoid valve 118, the valve will be opened to allow fluid to enter the central heating system 102 to increase the pressure to an acceptable level, or predetermined pressure. The system 100 may be configured to then re-measure the pressure within the central heating system 102 as a secondary check that there is no longer a problem with the pressure within the central heating system. For instance, the remote device 112 may transmit a control signal to the sensor electronics that causes the sensor 114 to take another pressure reading in the same manner and then transmit the measured pressure back to the remote device 112 in the same manner. This may allow the remote device 112 to ensure that any problem has been rectified.

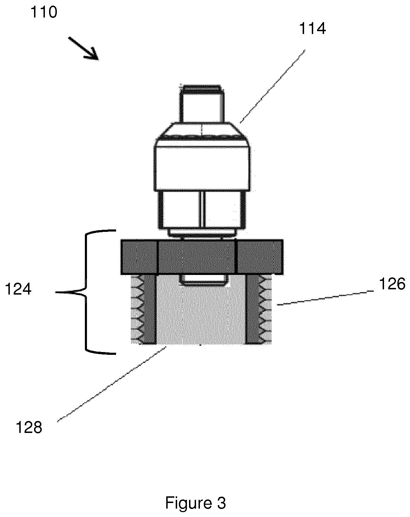

Referring to figure 3, the apparatus 110 may be configured to directly connect to a valve portion on a radiator. The sensor 114, and perhaps the sensor electronics, may comprise a suitable attachment 124. For instance, a pressure transducer may be directly connected to, and/or be contained within a housing that has, an attachment. The attachment 124 may comprise a pipe portion having a screw thread 126 of, for instance, 0.5 inch BSP (British Standard Pipe), and an opening 128 to accommodate, for instance a 15mm, pipe. This may make the sensor 114 suitable for connecting directly to a valve portion on a radiator. This may provide for a very convenient place for attachment, and for gaining access thereto. The attachment 124 may comprise a pipe portion having a screw thread of any other suitable BSP, and an opening to accommodate a pipe of a different size, which may make the apparatus suitable for placement on a radiator of a different size.

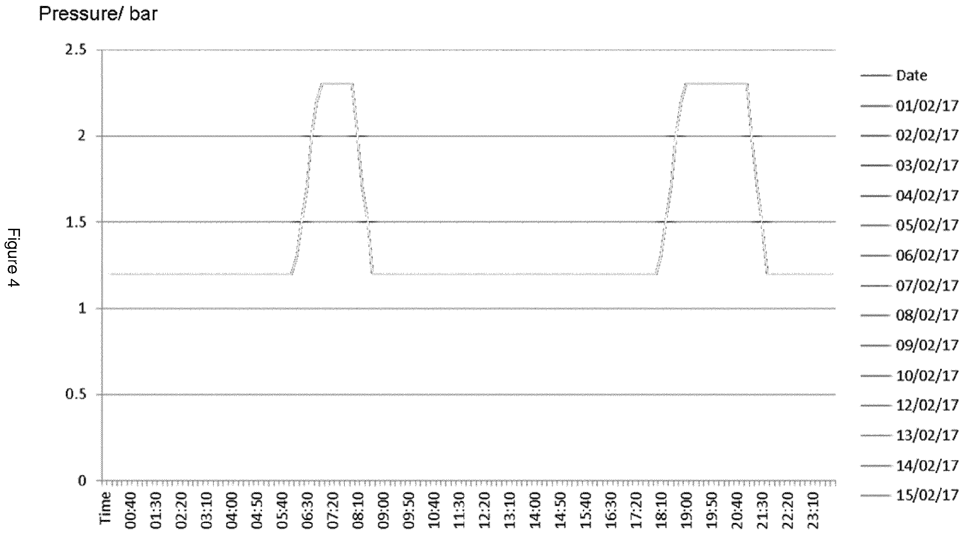

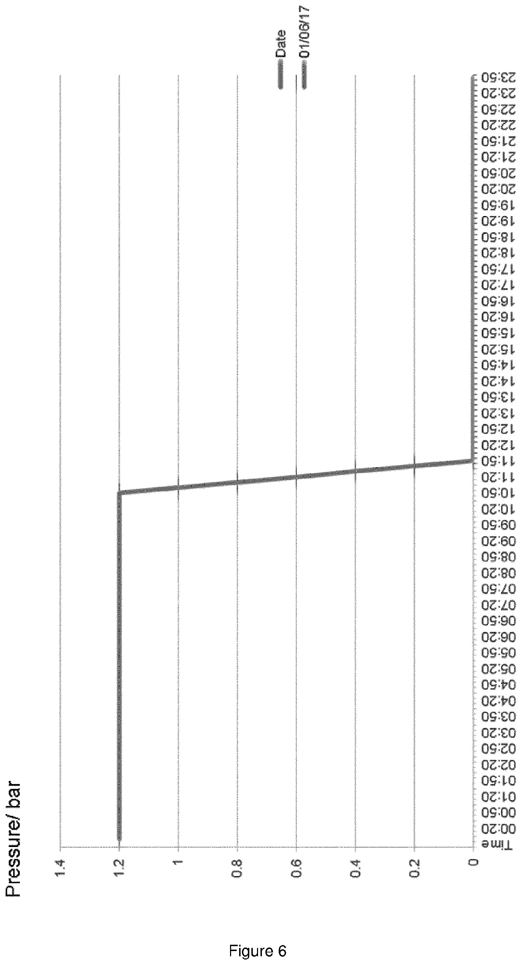

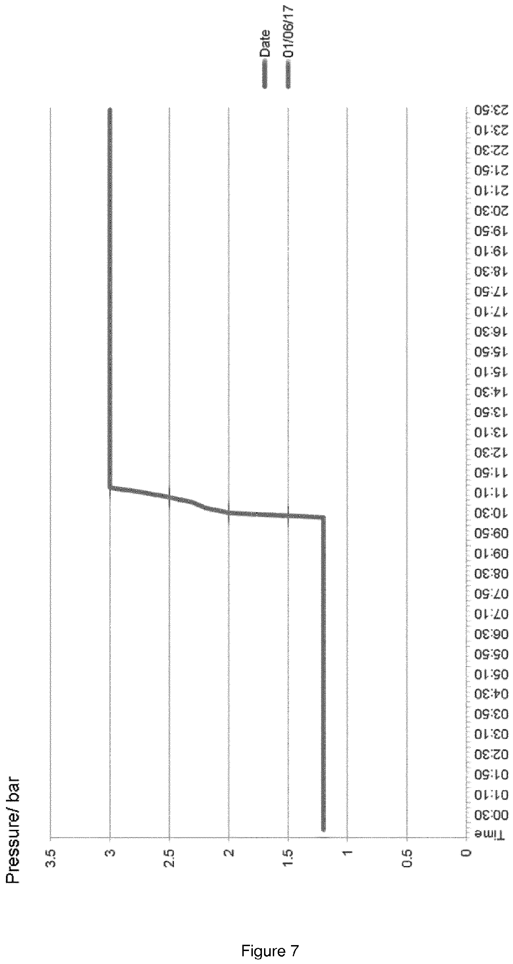

Figures 4, 5, 6 and 7 show some examples of how the pressure changes within a central heating system over time during normal operation of an exemplary central heating system, and when there is a potential fault condition. Figure 4 shows the pressure change within a central heating system over time during normal operation of an exemplary central heating system. Figure 5 shows the pressure change within an exemplary central heating system over time where there is a potential fault with an expansion vessel within the central heating system, for instance the expansion vessel has lost its charge. Figure 6 shows the pressure change within an exemplary central heating system over time, where this is likely a leak present within the central heating system. Figure 7 shows the pressure change within an exemplary central heating system over time, indicative of another potential fault. For a combination boiler, this may indicate that the plate to plate heat exchanger has failed, or for an unvented cylinder, this may indicate that the coil has compromised.

The above embodiments and examples are described by way of example only, and are in no way intended to limit the scope of the present invention as defined by the appended claims.

The following numbered clauses set out specific embodiments that may be useful in understanding the present invention:
1. A system for monitoring a central heating system, comprising:
   a sensor arranged to measure the pressure within the central heating system across a pressure range of at least 2 bar;
   sensor electronics in communication with the sensor, the sensor electronics configured to digitise a measured pressure received from the sensor at one of at least four levels, the levels having intervals of 0.15 bar or less, and to transmit the digitised measured pressure to a remote device; and
   a remote device in communication with the sensor electronics, the remote device configured to receive and process the digitised measured pressure from the sensor electronics to determine the measured pressure, and to determine a potential fault condition based on the measured pressure.
2. A system as in clause 1, wherein determining a potential fault condition based on the measured pressure comprises comparing the measured pressure to at least one threshold value.
3. A system as in clause 2, wherein determining a potential fault condition based on the measured pressure further comprises comparing the measured pressure to a second threshold value.
4. A system as in any preceding clause, wherein determining a potential fault condition based on the measured pressure comprises comparing the measured pressure to a predetermined trend in the pressure.
5. A system as in clause 4, wherein the remote device is configured to determine the predetermined trend in the pressure based on previous pressure measurements received from the sensor electronics.
6. A system as in either of clauses 4 or 5, wherein if the measured pressure does not follow the predetermined trend, a potential fault condition is determined.
7. A system as in any preceding clause, wherein if the remote device determines a potential fault condition based on the measured pressure, the remote device is further configured to transmit a control signal to the sensor electronics to cause the sensor to measure the pressure within the central heating system across a pressure range of at least 2 bar a second time, for transmitting back to the remote device to determine a second measured pressure.
8. A system as in any preceding clause, wherein the remote device is configured to confirm the determination of a potential fault condition based on the second measured pressure.
9. A system as in clause 7, or clause 8 when dependent on clause 7, wherein the remote device is configured to use the measured pressure and the second measured pressure to identify a trend in the pressure of the central heating system to confirm a determination of a potential fault condition.
10. A system as in clause 9, wherein the remote device is configured to compare the identified trend to at least one threshold value to determine a severity of determined potential fault condition.
11. A system as in any preceding clause, wherein the remote device comprises an alarm configured to activate upon determination of a potential fault condition, or upon confirmation of a determination of a potential fault condition.
12. A system as in clause 8, wherein the alarm is any combination of an audible, visual, tactile or vibratory alarm.
13. A system as in any preceding clause, wherein the remote device is configured, upon determination of a potential fault condition or upon confirmation of determination of a potential fault condition, to send an alert signal to a second remote device at a second remote location.
14. A system as in any preceding clause, wherein the remote device and/or the second remote device is configured for wireless communication.
15. A system as in any clause 14, wherein the wireless communication comprises any one or more of Internet, WiFi, Bluetooth, Zigbee, Radio, cellular and Infrared.
16. A system as in any preceding clause, wherein the sensor electronics is configured to receive a control signal from the remote device and/or the second remote device to cause the sensor to measure the pressure within the central heating system, and the sensor electronics is further configured to cause the sensor to measure the pressure within the central heating system.
17. A system as in any preceding clause, wherein the sensor electronics is configured for wireless communication with the remote device and/or the second remote device.
18. A system as in clause 17, wherein the wireless communication comprises any one or more of Internet, WiFi, Bluetooth, Zigbee, Radio, cellular and Infrared.
19. A system as in any preceding clause, wherein the system further comprises an adjustment means in communication with the sensor electronics, wherein the adjustment means is configured to adjust the pressure within the central heating system, and the sensor electronics is configured to receive a control signal from the remote device and/or the second remote device to control the adjustment means.
20. A system as in clause 19, wherein the adjustment means has a first position for forcing fluid to enter the central heating system to increase the pressure within the central heating system.
21. A system as in either of clauses 19 or 20, wherein the adjustment means has a second position for forcing fluid to leave the central heating system to decrease the pressure within the central heating system.
22. A system as in any of clauses 19-21, wherein the remote device, in response to determining a potential fault condition, or in response to the measured pressure exceeding a threshold value, is configured to transmit a control signal to the sensor electronics to cause the adjustment means to move into the first position or the second position based on the determined potential fault condition, to adjust the pressure in the central heating system accordingly.
23. A system as in any of clauses 19-22, wherein the remote device, in response to determining a potential fault condition and causing the adjustment means to adjust the pressure in the central heating system accordingly, is further configured to transmit a control signal to the sensor electronics to cause the sensor to measure a further pressure for transmitting back to the remote device for processing.
24. A system as in clause 23, wherein the remote device is further configured to transmit a control signal to the sensor electronics to cause the sensor to measure a further pressure for transmitting back to the remote device for processing, only after a predetermined time period has elapsed from causing the adjustment means to adjust the pressure in the central heating system accordingly.
25. A system as in any preceding clause, wherein the sensor generates a signal proportional to the pressure within the central heating system.
26. A system as in any preceding clause, wherein the sensor is arranged to measure the pressure within the central heating system across a pressure range of at least 2.5 bar, or at least 3 bar, or at least 3.5 bar, or at least 4 bar.
27. A system as in any preceding clause, wherein the sensor is connected to pipework or to part of a radiator within the central heating system.
28. A system as in any preceding clause, wherein the sensor and sensor electronics are connected to an attachment means, the attachment means comprising a pipe portion having an opening to accommodate a pipe therein, the pipe portion further comprising an internal screw thread.
29. A system as in clause 28, wherein the opening is sized to accommodate a pipe having a 15mm diameter, and the internal screw thread is 0.5 inch British Standard Pipe, BSP.
30. A system as in any preceding clause, wherein the sensor is configured to measure the pressure within the central heating system intermittently, or continuously.
31. A system as claimed in any preceding clause, wherein the sensor is configured to measure the pressure on demand by receiving a signal from the sensor electronics.
32. A system as in any preceding clause, wherein the sensor electronics are configured to digitise a measured pressure received from the sensor at one of at least five levels, or at least six levels, or at least ten levels, or at least twenty levels and/or wherein the levels have intervals of 0.10 bar or less, or of 0.05 bar or less, or of 0.01 bar or less.
33. A system as in any preceding clause, wherein the sensor electronics comprises a battery for powering any combination of the sensor, sensor electronics, and adjustment means.
34. A system as in any preceding clause, further comprising an external power source, and wherein any combination of the sensor, sensor electronics, and adjustment means are powered by the external power source.
35. A system as in any preceding clause, wherein the potential fault condition is any one or more of: a loss of pressure in the central heating system; a low pressure for the central heating system; the presence of a leak in the central heating system; malfunction of an expansion vessel in the central heating system; an increase in pressure in the central heating system; a high pressure for the central heating system; a fault with a hot water cylinder within the central heating system; a fault with a heat exchanger within the central heating system; and the pressure in the central heating system being outside of an acceptable range.
36. A system as in any preceding clause, wherein the sensor is a pressure transducer.
37. A system as in any preceding clause, wherein the sensor electronics is a printed circuit board, comprising a microprocessor and an embedded antenna.
38. A system as in any preceding clause, wherein the remote device and/or second remote device is any one of a server, a computer, a laptop, a tablet, or a smart phone.
39. A system as in any preceding clause, wherein the adjustment means comprises one or more valves.
40. A system as in any preceding clause, wherein the adjustment means comprises one or more solenoid valves.
41. A system as in clause 39 or 40, wherein the adjustment means further comprises one or more water disconnectors and/or back flow relief port.
42. A method for monitoring a central heating system, comprising:
   measuring the pressure within the central heating system across a pressure range of at least 2 bar;
   digitising the measured pressure at one of at least four levels, the levels having intervals of 0.15 bar or less;
   transmitting the digitised measured pressure to a remote device;
   processing the digitised measured pressure at the remote device to determine the measured pressure; and
   determining a potential fault condition based on the measured pressure.
43. A method as in clause 42, wherein determining a potential fault condition based on the measured pressure comprises comparing the measured pressure to at least one threshold value.
44. A method as in clause 43, wherein determining a potential fault condition based on the measured pressure further comprises comparing the measured pressure to a second threshold value.
45. A method as in any of clauses 42-44, wherein determining a potential fault condition based on the measured pressure comprises comparing the measured pressure to a predetermined trend in the pressure.
46. A method as in clause 45, wherein the remote device determines the predetermined trend in the pressure based on previously measured, digitised, transmitted and processed pressure measurements.
47. A method as in clause 46, wherein if the measured pressure does not follow the predetermined trend, a potential fault condition is determined
48. A method as in any of clauses 42-47, wherein the remote device determines a potential fault condition based on the measured pressure.
49. A method as in any of clauses 42-47, wherein if a potential fault condition based on the measured pressure is determined, the method further comprises transmitting a control signal from the remote device to cause a second pressure measurement to be taken for transmitting back to the remote device.
50. A method as in clause 49, further comprising digitising the second measured pressure at one of at least four levels, the levels having intervals of 0.15 bar or less, and transmitting the digitised second measured pressure to the remote device.
51. A method as in clause 50, further comprising processing the digitised second measured pressure at the remote device to determine the second measured pressure, and confirming a determined potential fault condition based on the second measured pressure.
52. A method as in any of clauses 49-51, further comprising processing the measured pressure and the second measured pressure at the remote device to identify a trend in the pressure of the central heating system for confirming a determined potential fault condition.
53. A method as in clause 52, further comprising comparing the identified trend to at least one threshold value for determining a severity of a determined potential fault condition.
54. A method as in any of clauses 42-53, further comprising activating an alarm at the remote device on determining a potential fault condition and/or confirming a determined potential fault condition.
55. A method as in clause 54, wherein the alarm is any combination of an audible, visual, tactile or vibratory alarm
56. A method as in any of clauses 42-55, further comprising transmitting from the remote device an alert signal to a second remote device at a second remote location to indicate a potential fault condition.
57. A method as in any of clauses 42-56, further comprising connecting a sensor and associated sensor electronics on pipework of the central heating system for measuring the pressure within the central heating system across the relevant pressure range.
58. A method as in any of clauses 42-56, further comprising connecting a sensor and associated sensor electronics to a part of a radiator of the central heating system for measuring the pressure within the central heating system across the relevant pressure range.
59. A method as in any of clauses 42-58, further comprising remotely adjusting the pressure within the central heating system from the remote device based on the measured pressure and/or the potential fault condition
60. A method as in clause 59, wherein remotely adjusting the pressure within the central heating system from the remote device comprises analysing the measured pressure and/or the potential fault condition at the remote device and remotely adjusting the pressure based on the analysis.
61. A method as in clause 60, wherein analysing the measured pressure comprises confirming that the measured pressure exceeds a predetermined threshold.
62. A method as in either of clauses 59 or 61, wherein remotely adjusting the pressure within the central heating system comprises forcing fluid to enter the central heating to increase the pressure within the central heating system.
63. A method as in any of clauses 59-62, wherein remotely adjusting the pressure within the central heating system comprises forcing fluid to leave the central heating to reduce the pressure within the central heating system.
64. A method as in any of clauses 59-63, wherein after remotely adjusting the pressure within the central heating system from the remote device, the method further comprises transmitting a signal from the remote device to cause a further occurrence of measuring the pressure within the central heating system across a pressure range of at least 2 bar for transmitting back to the remote device.
65. A method as in clause 64, further comprising digitising the further measured pressure at one of at least four levels, the levels having intervals of 0.15 bar or less, and transmitting the digitised further measured pressure back to the remote device.
66. A method as in any of clauses 42-65, wherein the potential fault condition is one or more of: a loss of pressure in the central heating system; a low pressure for the central heating system; the presence of a leak in the central heating system; malfunction of an expansion vessel in the central heating system; an increase in pressure in the central heating system; a high pressure for the central heating system; a fault with a hot water cylinder within the central heating system; a fault with a heat exchanger within the central heating system; and the pressure in the central heating system being outside of an acceptable range.
67. A method as in any of clauses 42-66, wherein measuring the pressure within the central heating system across a pressure range of at least 2 bar occurs intermittently or continuously.
68. A method as in any of clauses 42-67, wherein measuring the pressure within the central heating system across a pressure range of at least 2 bar comprises generating a signal proportional to the pressure within the central heating system across a pressure range of at least 2 bar.
69. A method as in any of clauses 42-68, wherein measuring the pressure within the central heating system across a pressure range of at least 2 bar comprises measuring the pressure within the central heating system across a pressure range of at least 2.5 bar, or at least 3 bar, or at least 3.5 bar, or at least 4 bar.
70. A method as in any of clauses 42-69, wherein digitising the measured pressure comprises digitising the measured pressure at one of at least five levels, or at one of at least six levels, or at one of at least ten levels, or at one of at least twenty levels and/or wherein the levels have intervals of 0.10 bar or less, or of 0.05 bar or less, or of 0.01 bar or less.
71. A method as in any of clauses 42-70, wherein the remote device and/or second remote device is any one of a server, a computer, a laptop, a tablet, or a smart phone.
72. A method as in any of clauses 42-71, wherein any communication is wireless.
73. A method as in 72, wherein the wireless communication comprises any one or more of Internet, WiFi, Bluetooth, Zigbee, Radio, cellular and Infrared.
74. The system of any of clauses 1-41 for carrying out the method according to any of clauses 42-7

## Claims

1. A system for monitoring a central heating system, comprising:
a sensor arranged to measure the pressure within the central heating system across a pressure range of at least 2 bar;
sensor electronics in communication with the sensor, the sensor electronics configured to digitise a measured pressure received from the sensor at one of at least four levels, the levels having intervals of 0.15 bar or less, and to transmit the digitised measured pressure to a remote device; and
a remote device in communication with the sensor electronics, the remote device configured to receive and process the digitised measured pressure from the sensor electronics to determine the measured pressure, and to determine a potential fault condition based on the measured pressure.

2. A system as claimed in claim 1, wherein determining a potential fault condition based on the measured pressure comprises comparing the measured pressure to at least one threshold value, and preferably to a second threshold value

3. A system as claimed in any preceding claim, wherein determining a potential fault condition based on the measured pressure comprises comparing the measured pressure to a predetermined trend in the pressure, preferably based on previous pressure measurements received from the sensor electronics and/or wherein if the measured pressure does not follow the predetermined trend, a potential fault condition is determined.

4. A system as claimed in any preceding claim, wherein if the remote device determines a potential fault condition based on the measured pressure, the remote device is further configured to transmit a control signal to the sensor electronics to cause the sensor to measure the pressure within the central heating system across a pressure range of at least 2 bar a second time for transmitting back to the remote device to determine a second measured pressure, preferably wherein the remote device is configured to confirm the determination of a potential fault condition based on the second measured pressure.

5. A system as claimed in claim 4, wherein the remote device is configured to use the measured pressure and the second measured pressure to identify a trend in the pressure of the central heating system to confirm a determination of a potential fault condition, preferably wherein the remote device is configured to compare the identified trend to at least one threshold value to determine a severity of determined potential fault condition.

6. A system as claimed in any preceding claim, wherein the remote device comprises an alarm configured to activate upon determination of a potential fault condition, or upon confirmation of a determination of a potential fault condition, preferably wherein the alarm is any combination of an audible, visual, tactile or vibratory alarm, and/or to send an alert signal to a second remote device at a second remote location.

7. A system as claimed in any preceding claim, wherein the sensor electronics is configured to receive a control signal from the remote device and/or the second remote device to cause the sensor to measure the pressure within the central heating system, and the sensor electronics is further configured to cause the sensor to measure the pressure within the central heating system.

8. A system as claimed in any preceding claim, wherein the system further comprises an adjustment means in communication with the sensor electronics;
wherein the adjustment means is configured to adjust the pressure within the central heating system, and the sensor electronics is configured to receive a control signal from the remote device and/or the second remote device to control the adjustment means;
preferably wherein the adjustment means has a first position for forcing fluid to enter the central heating system to increase the pressure within the central heating system and/or a second position for forcing fluid to leave the central heating system to decrease the pressure within the central heating system;
more preferably wherein the remote device, in response to determining a potential fault condition, or in response to the measured pressure exceeding a threshold value, is configured to transmit a control signal to the sensor electronics to cause the adjustment means to move into the first position or the second position based on the determined potential fault condition, to adjust the pressure in the central heating system accordingly.

9. A system as claimed in claim 8 wherein the remote device, in response to determining a potential fault condition and causing the adjustment means to adjust the pressure in the central heating system accordingly, is further configured to transmit a control signal to the sensor electronics to cause the sensor to measure a further pressure for transmitting back to the remote device for processing, preferably only after a predetermined time period has elapsed from causing the adjustment means to adjust the pressure in the central heating system accordingly.

10. A system as claimed in any preceding claim, wherein the sensor is arranged to generate a signal proportional to the pressure within the central heating system and/or wherein the sensor is arranged to measure the pressure within the central heating system across a pressure range of at least 2.5 bar, or at least 3 bar, or at least 3.5 bar, or at least 4 bar.

11. A system as claimed in any preceding claim, wherein the sensor is configured to measure the pressure within the central heating system intermittently, continuously or on demand by receiving a signal from the sensor electronics; and/or
wherein the sensor electronics are configured to digitise a measured pressure received from the sensor at one of at least five levels, or at least six levels, or at least ten levels, or at least twenty levels and/or wherein the levels have intervals of 0.10 bar or less, or of 0.05 bar or less, or of 0.01 bar or less.

12. A system as claimed in any preceding claim, wherein the potential fault condition is any one or more of: a loss of pressure in the central heating system; a low pressure for the central heating system; the presence of a leak in the central heating system; malfunction of an expansion vessel in the central heating system; an increase in pressure in the central heating system; a high pressure for the central heating system; a fault with a hot water cylinder within the central heating system; a fault with a heat exchanger within the central heating system; and the pressure in the central heating system being outside of an acceptable range.

13. A method for monitoring a central heating system, comprising:
measuring the pressure within the central heating system across a pressure range of at least 2 bar;
digitising the measured pressure at one of at least four levels, the levels having intervals of 0.15 bar or less;
transmitting the digitised measured pressure to a remote device;
processing the digitised measured pressure at the remote device to determine the measured pressure; and
determining a potential fault condition based on the measured pressure.

14. A method as claimed in claim 13, wherein if a potential fault condition based on the measured pressure is determined, the method further comprising transmitting a control signal from the remote device to cause a second pressure measurement to be taken for transmitting back to the remote device and preferably digitising the second measured pressure at one of at least four levels, the levels having intervals of 0.15 bar or less, and transmitting the digitised second measured pressure to the remote device; preferably wherein the method further comprises processing the digitised second measured pressure at the remote device to determine the second measured pressure, and confirming a determined potential fault condition based on the second measured pressure.

15. A method as claimed in any of claims 13 or 14, further comprising:
remotely adjusting the pressure within the central heating system from the remote device based on the measured pressure and/or the potential fault condition, preferably wherein remotely adjusting the pressure within the central heating system from the remote device comprises analysing the measured pressure and/or the potential fault condition at the remote device and remotely adjusting the pressure based on the analysis, more preferably wherein analysing the measured pressure comprises confirming that the measured pressure exceeds a predetermined threshold, and/or wherein remotely adjusting the pressure within the central heating system comprises forcing fluid to enter or leave the central heating to increase or reduce the pressure within the central heating system.
